# EUROPEAN PATENT APPLICATION

(11) **EP 4 826 305 A2**
(43) Date of publication of application: **21.10.2026**
(21) Application number: 26203145.3
(22) Date of filing: 13.05.2025
(51) Int. Cl.: F24F 13/22

(54) **INDOOR UNIT OF AIR CONDITIONER**

(30) Priority: 24.05.2024 JP 2024084843; 24.05.2024 JP 2024084844
(62) Document number(s) of the earlier application(s) in accordance with Art. 76 EPC: 25175890.0 / 4 671 629
(71) Applicant: Carrier Japan Corporation, Tokyo (JP)
(72) Inventor: YOSHITAKE, Nobusato, Shizuoka (JP); OZAWA, Tetsuro, Shizuoka (JP)
(74) Representative: Gramm, Lins & Partner Patent- und Rechtsanwälte PartGmbB

(57) **Abstract**

An indoor unit of an air conditioner includes an air inlet port for suctioning air inside a room; a heat exchanger for exchanging heat with the air suctioned from the air inlet port; an air outlet port for blowing the air after heat exchange by the heat exchanger out to the room; a drain pan provided below the heat exchanger, the drain pan being for receiving water generated at the heat exchanger; a drain pump for discharging water collected in the drain pan; and a drain pump fixing member for fixing the drain pump, where the drain pump fixing member is attached in a manner sandwiching a fixing part to which the drain pump is fixed.

## Description

### BACKGROUND OF THE INVENTION

### Field of the Invention

An embodiment of the present invention relates to an indoor unit of a ceiling-embedded air conditioner that is embedded in a ceiling of a room.

### Description of the Related Art

In the case of providing air conditioning in a large space such as a shop, for example, an indoor unit that is capable of blowing out air-conditioning wind in a plurality of directions and that does not make a resident feel enclosed, or in other words, a so-called ceiling-embedded indoor unit, is used in many cases as an indoor unit of an air conditioner, instead of an indoor unit that is mounted on a wall, or in other words, a so-called wall-mounted indoor unit. For example, as disclosed in Japanese Patent Laid-Open No. 2021-196141, such a ceiling-embedded indoor unit includes a heat exchanger for exchanging heat with air, a drain pan for receiving water generated at the heat exchanger, and a drain pump for discharging water collected in the drain pan.

According to a conventional structure, a drain pump is fixed to a heat insulating member formed of polystyrene foam or the like with a screw. Therefore, according to the conventional structure, there is a problem in that sheet metal with a screw hole has to be inserted inside the heat insulating member, and a manufacturing cost is high.

A present invention provides a technical solution that relates to an indoor unit of an air conditioner including a drain pump for discharging water collected in a drain pan, where the drain pump can be fixed by a low-cost structure.

### SUMMARY OF THE INVENTION

An indoor unit of an air conditioner according to a present invention includes an air inlet port for suctioning air inside a room; a heat exchanger for exchanging heat with the air suctioned from the air inlet port; an air outlet port for blowing the air after heat exchange by the heat exchanger out to the room; a drain pan provided below the heat exchanger, the drain pan being for receiving water generated at the heat exchanger; a drain pump for discharging water collected in the drain pan; a UV radiation unit for radiating ultraviolet light to water reservoir provided at a part, of the drain pan, positioned below the drain pump; and a UV radiation unit fixing member for fixing the UV radiation unit. The UV radiation unit fixing member is further capable of fixing the water detection unit.

### BRIEF DESCRIPTION OF THE DRAWINGS

FIG. 1 is a perspective view schematically showing an example structure of an indoor unit of an air conditioner according to a present embodiment;
FIG. 2 is a longitudinal sectional view schematically showing an example structure of the indoor unit of the air conditioner according to the present embodiment;
FIG. 3 is a plan view schematically showing an example structure of a drain pan according to the present embodiment;
FIG. 4 is a bottom view schematically showing an example structure of inside of the indoor unit of the air conditioner according to the present embodiment;
FIG. 5 is a perspective view schematically showing an example structure of a drain pump according to the present embodiment and its surroundings (No. 1);
FIG. 6 is a perspective view schematically showing an example structure of the drain pump according to the present embodiment and its surroundings (No. 2);
FIG. 7 is a perspective view schematically showing an example structure of a UV radiation unit fixing member according to the present embodiment (No. 1);
FIG. 8 is a perspective view schematically showing an example structure of the UV radiation unit fixing member according to the present embodiment (No. 2);
FIG. 9 is a diagram schematically showing an example arrangement of a UV radiation device according to the present embodiment;
FIG. 10 is a block diagram schematically showing an example structure of a control system of the indoor unit of the air conditioner according to the present embodiment;
FIG. 11 is a diagram schematically showing an example of stirring control by the indoor unit of the air conditioner according to the present embodiment;
FIG. 12 is a bottom view of a heat insulating member schematically showing an example arrangement of a drain pump fixing member according to the present embodiment;
FIG. 13 is a perspective view showing a state before the drain pump fixing member according to the present embodiment is attached to a fixing part;
FIG. 14 is a perspective view showing a state where an inner member is attached to the fixing part according to the present embodiment but an outer member is not yet attached;
FIG. 15 is a longitudinal sectional view showing a state after the drain pump fixing member according to the present embodiment is attached to the fixing part;
FIG. 16 is a perspective view showing a state before a drain pump fixing member according to a modification of the present embodiment is attached to the fixing part; and
FIG. 17 is a perspective view schematically showing an example structure of the drain pump fixing member according to the modification of the present embodiment.

### DETAILED DESCRIPTION OF THE INVENTION

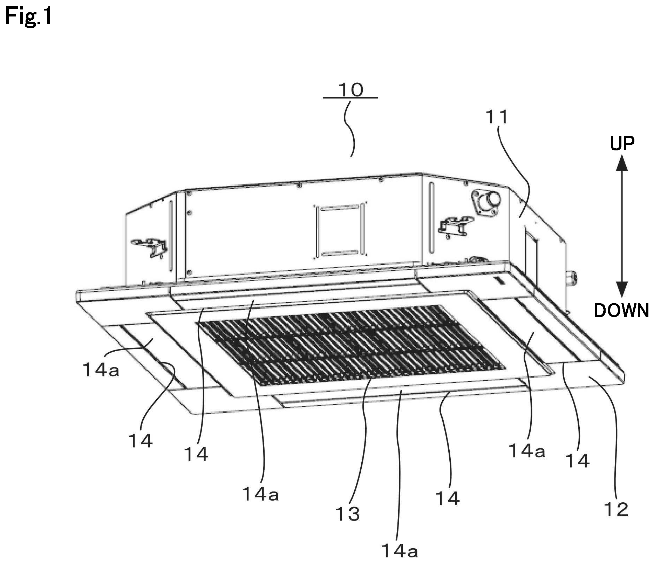

Hereinafter, an embodiment of an indoor unit of an air conditioner will be described with reference to the drawings. An indoor unit 10 of an air conditioner shown in FIG. 1 is an indoor unit that is embedded in a ceiling of a room that is an air-conditioned space, or in other words, a so-called ceiling-embedded indoor unit. The indoor unit 10 includes a housing 11 and a decorative panel 12. The housing 11 is inserted from inside the room into a rectangular opening, not shown, provided in the ceiling. The housing 11 is fixed in a state where the housing 11 is hung from above the ceiling by a hanging bolt or the like, not shown. The decorative panel 12 is attached in such a way that the decorative panel 12 is exposed to the room at a position below the housing 11.

The decorative panel 12 is formed as an approximately rectangular plate. The decorative panel 12 is provided with an air inlet port 13 for suctioning air inside the room, and air outlet ports 14 for blowing air into the room. The air inlet port 13 is formed at a center of the decorative panel 12, and is approximately square-shaped. The air inlet port 13 is formed as a so-called air inlet grille with lattice openings that allow air to pass. The air outlet port 14 forms a long opening that extends along each side of the air inlet port 13. A louver 14a that is rotatable and that is for adjusting a direction of wind from the air outlet port 14 is provided at the air outlet port 14.

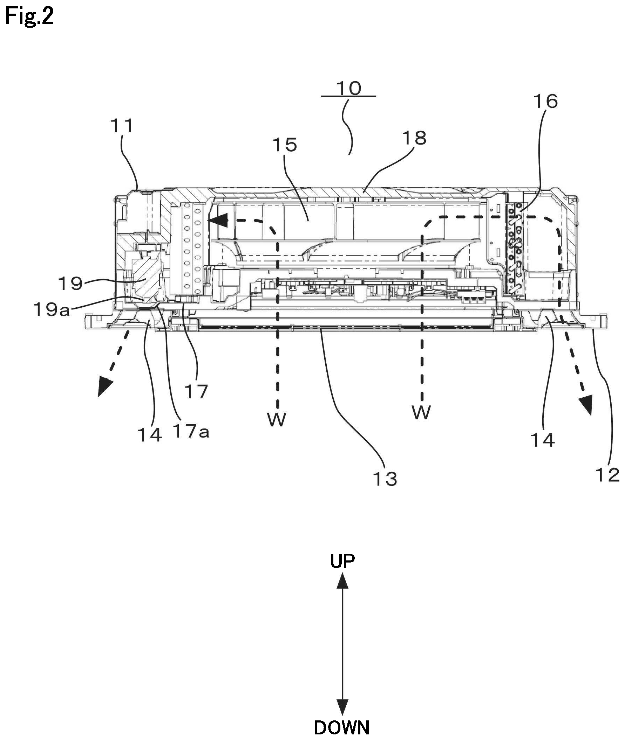

As shown in FIG. 2, the housing 11 forms upper and side frames of the indoor unit 10. The housing 11 has a box shape with a side wall portion, an upper wall portion, and a lower opening. The side wall portion of the housing 11 is wall-shaped so as to block sides of the housing 11. The upper wall portion of the housing 11 is wall-shaped so as to block an upper side of the housing 11. The lower opening of the housing 11 is an approximately rectangular opening that allows a lower side of the housing 11 to be open. The decorative panel 12 covers the lower opening of the housing 11 from below. A blower 15, a heat exchanger 16, and the like are housed inside the housing 11.

The blower 15 is disposed at a center inside the housing 11. The blower 15 is disposed above the air inlet port 13. The heat exchanger 16 is disposed to surround the blower 15. The heat exchanger 16 is disposed above a part, of the decorative panel 12, between the air inlet port 13 and the air outlet ports 14. The heat exchanger 16 forms a known refrigeration cycle together with a compressor, a heat exchanger outside the room, and the like that are not shown, and is capable of heating and cooling air.

As indicated by dashed arrows W in FIG. 2, the indoor unit 10 suctions air inside the room from the air inlet port 13 by driving the blower 15, exchanges heat with the suctioned air by the heat exchanger 16, and blows out the heat-exchanged air from the air outlet ports 14. The indoor unit 10 can, in this manner, perform air-conditioning control so as to adjust a temperature inside the room to a predetermined set temperature.

Furthermore, the indoor unit 10 includes a drain pan 17 inside the housing 11. The drain pan 17 is disposed between the decorative panel 12 and the heat exchanger 16. The drain pan 17 is disposed to fill a part above a part between the air inlet port 13 and the air outlet ports 14. The drain pan 17 receives drain water generated at the heat exchanger 16, at a part below the heat exchanger 16. The drain water received by the drain pan 17 is collected in the drain pan 17.

Furthermore, the indoor unit 10 includes a heat insulating member 18 inside the housing 11. The heat insulating member 18 is formed of a material having a heat insulation capacity, such as polystyrene foam. Like the housing 11, the heat insulating member 18 has a box shape with a side wall portion, an upper wall portion, and a lower opening. The side wall portion of the heat insulating member 18 is wall-shaped so as to block sides of the heat insulating member 18. The upper wall portion of the heat insulating member 18 is wall-shaped so as to block an upper side of the heat insulating member 18. The lower opening of the heat insulating member 18 is an approximately rectangular opening that allows a lower side of the heat insulating member 18 to be open.

In a state where the heat insulating member 18 is disposed inside the housing 11, an outer surface of the side wall portion of the heat insulating member 18 is disposed along an inner surface of the side wall portion of the housing 11. Furthermore, in the state where the heat insulating member 18 is disposed inside the housing 11, an outer surface of the upper wall portion of the heat insulating member 18 is disposed along an inner surface of the upper wall portion of the housing 11. Moreover, in the state where the heat insulating member 18 is disposed inside the housing 11, the lower opening of the heat insulating member 18 is disposed inside the lower opening of the housing 11.

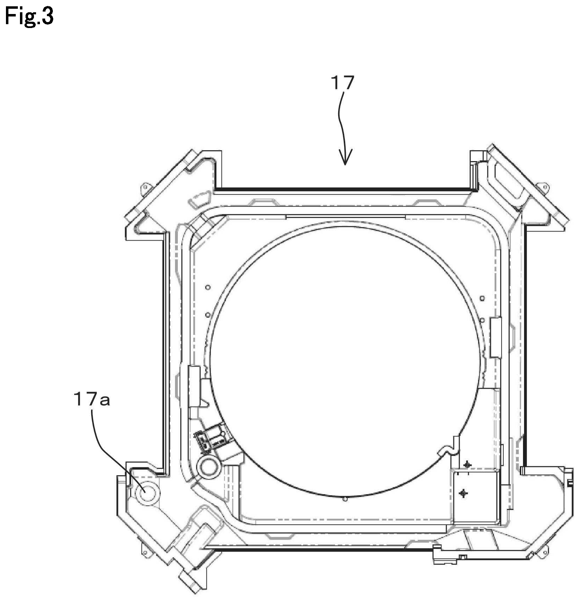

Moreover, the indoor unit 10 includes a drain pump 19 for discharging water collected in the drain pan 17 to outside the unit. As shown in FIG. 3, a water reservoir 17a that is recessed downward is provided at a part, of the drain pan 17, that is positioned below the drain pump 19. An inlet port 19a for water that is provided at a lower end of the drain pump 19 extends into the water reservoir 17a, and water is thus smoothly suctioned by the drain pump 19.

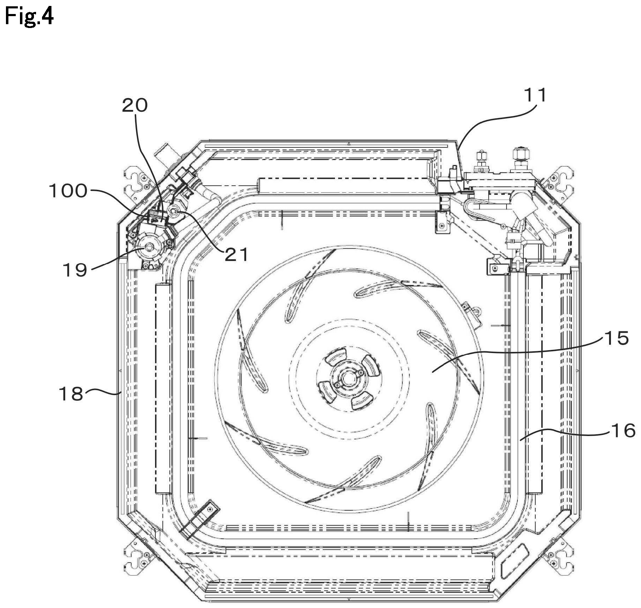

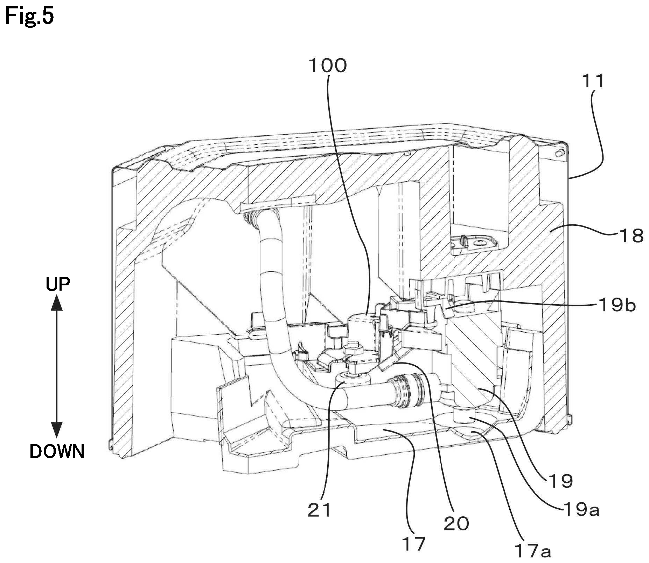

As shown in FIGS. 4, 5, and 6, the indoor unit 10 includes a UV radiation device 20 that is an example of a UV radiation unit. For example, the UV radiation device 20 includes a light source that is capable of emitting ultraviolet light, such as a UV light emitting diode (LED), and a substrate for controlling emission of light from the light source, and is capable of radiating ultraviolet light particularly toward the water reservoir 17a of the drain pan 17. The indoor unit 10 also includes a UV radiation unit fixing member 100 for fixing the UV radiation device 20.

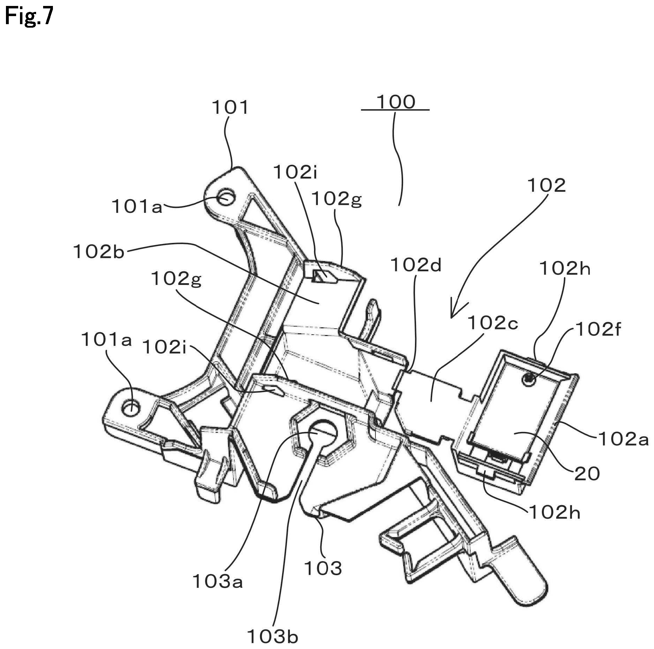

As shown in FIG. 7, the UV radiation unit fixing member 100 integrally includes a joint part 101 that is fixed, or in other words, fastened, together with the drain pump 19, and a UV radiation unit fixing part 102 for fixing the UV radiation device 20.

The joint part 101 extends toward the drain pump 19. Both end portions of the joint part 101 extend further toward the drain pump 19, and each includes a screw hole 101a.

The UV radiation unit fixing part 102 includes an accommodating portion 102a for accommodating the UV radiation device 20, an accommodating portion fixing portion 102b for fixing the accommodating portion 102a, and a coupling portion 102c for coupling the accommodating portion 102a and the accommodating portion fixing portion 102b. A hinge portion 102d that is a thin portion is present between the accommodating portion fixing portion 102b and the coupling portion 102c, and the UV radiation unit fixing part 102 integrally includes the accommodating portion 102a, the accommodating portion fixing portion 102b, and the coupling portion 102c.

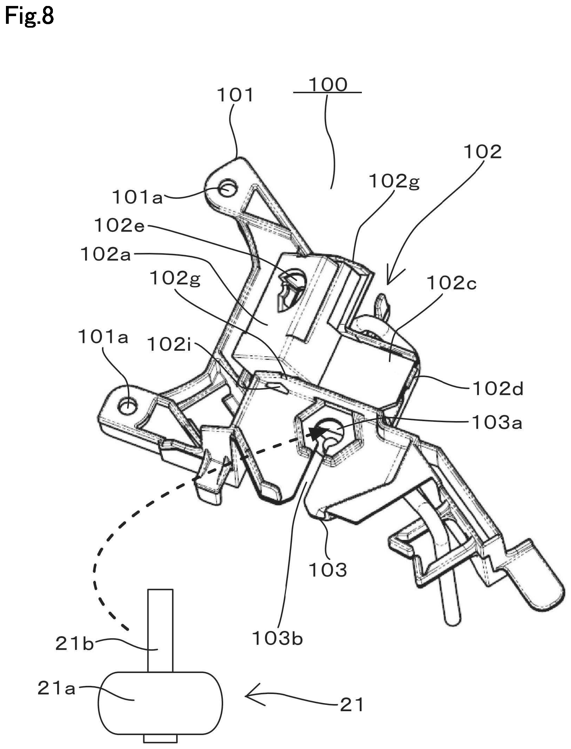

As shown in FIG. 8, a radiation port 102e is provided in the accommodating portion 102a. The UV radiation device 20 is a control substrate where the UV LED is mounted, and as shown in FIG. 7, the UV radiation device 20 is accommodated in the accommodating portion 102a in such a way that the radiation port 102e and the UV LED face each other, and is fixed to the accommodating portion 102a by a screw 102f.

As shown in FIG. 7, the fixing portion 102b is provided inclined toward the joint part 101. Furthermore, engaging walls 102g to be engaged with side surfaces of the accommodating portion 102a are formed at both end portions of the fixing portion 102b. An engaging hole 102i to be engaged with an engaging claw 102h provided on the side surface of the accommodating portion 102a is formed in the engaging wall 102g.

As shown in FIG. 8, when the accommodating portion 102a and the coupling portion 102c are bent at the hinge portion 102d, the engaging claws 102h and the engaging holes 102i are latched, and the accommodating portion 102a is closed by the fixing portion 102b.

The UV radiation device 20 fixed to the UV radiation unit fixing part 102 is inclined in such a way that the radiation port 102e for radiating ultraviolet light faces toward the water reservoir 17a of the drain pan 17. The UV radiation device 20 is thus disposed in a manner capable of radiating ultraviolet light toward the water reservoir 17a.

The UV radiation unit fixing member 100 further integrally includes a float switch fixing part 103. The float switch fixing part 103 is provided at a side of the UV radiation unit fixing part 102. A holding hole 103a for holding a float switch 21 is formed in the float switch fixing part 103. Furthermore, a slit 103b continuous to the holding hole 103a is formed in the float switch fixing part 103.

The float switch 21 is an example of a water level detection unit for detecting a water level inside the drain pan 17, and includes a switch main body 21a and a holding column 21b. The float switch 21 is fixed to the float switch fixing part 103 due to the holding column 21b being inserted in the holding hole 103a and the holding column 21b being fastened by a nut or the like.

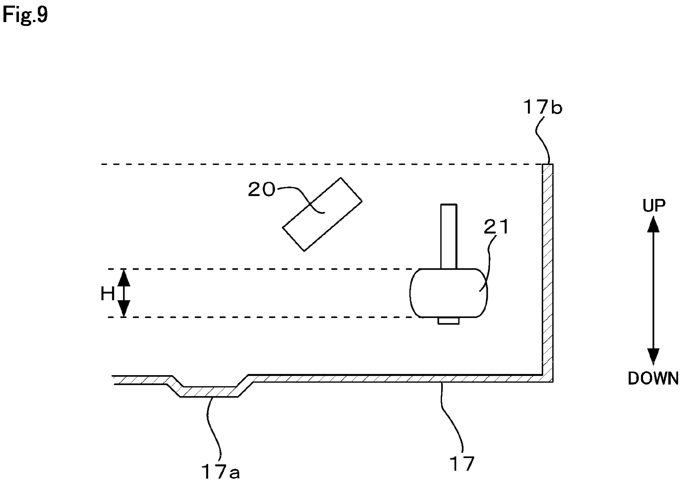

As shown in FIG. 9, the UV radiation device 20 that is fixed to the UV radiation unit fixing member 100 is disposed at a position that is higher than an upper limit of a detection range H of the float switch 21 and lower than an upper end 17b of the drain pan 17. Additionally, the detection range H of the float switch 21 specifies a range of water level that can be detected by the float switch 21. The float switch 21 is switched from an on state to an off state when the water level inside the drain pan 17 is outside the detection range H, and is switched from the off state to the on state when the water level inside the drain pan 17 is within the detection range H.

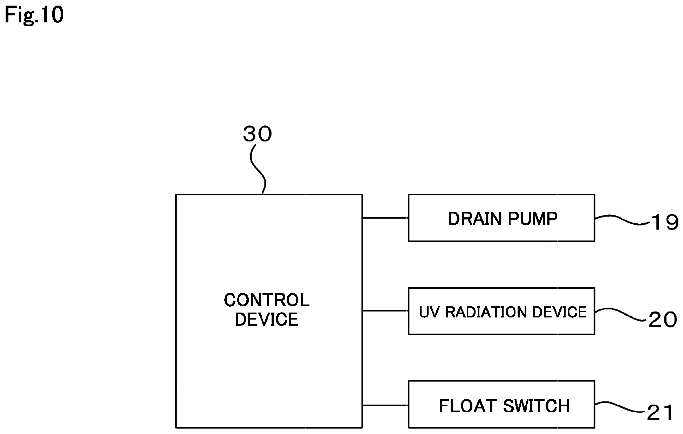

A control device 30 shown in FIG. 10 is mainly configured by a microcomputer, for example, and is capable of controlling overall operation of the indoor unit 10 based on a control program, setting data and the like. In the case where the float switch 21 is in the off state, or in other words, the water level inside the drain pan 17 is lower than a lower limit of the detection range H, the control device 30 causes the indoor unit 10 to operate, based on the control program, the setting data and the like. However, when the float switch 21 is switched from the off state to the on state, the control device 30 stops operation of the indoor unit 10. That is, the control device 30 stops operation of the indoor unit 10 in a case where the water level inside the drain pan 17 falls within the detection range H of the float switch 21. This prevents heat exchange by the heat exchanger 16 and generation of drain water, and a further rise in the water level inside the drain pan 17 can be prevented, and the UV radiation device 20 can be prevented from being submerged. Moreover, water can be prevented from overflowing from the drain pan 17.

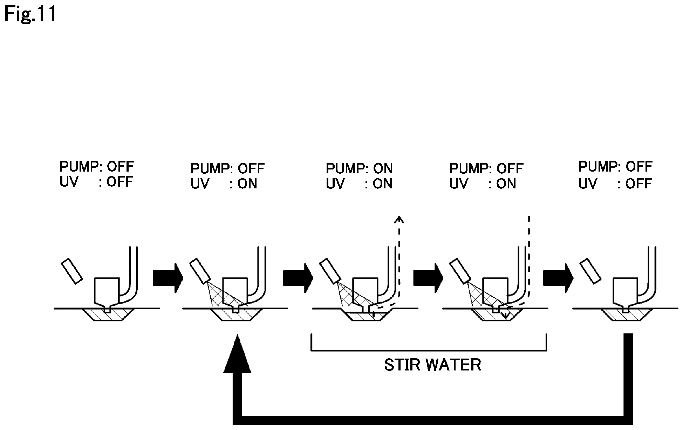

Furthermore, the control device 30 is capable of performing stirring control during radiation of ultraviolet light by the UV radiation device 20. As shown in FIG. 11, the stirring control is control of alternately switching the drain pump 19 between an operation state and a stopped state during radiation of ultraviolet light by the UV radiation device 20. Accordingly, a period when water in the water reservoir 17a of the drain pan 17 is suctioned by the drain pump 19 and a period when water returns from the drain pump 19 to the water reservoir 17a of the drain pan 17 repeatedly alternate with each other, and water in the water reservoir 17a of the drain pan 17 can be stirred. Accordingly, ultraviolet light can be evenly radiated on the water in the drain pan 17, and reproduction of microorganisms can be effectively inhibited.

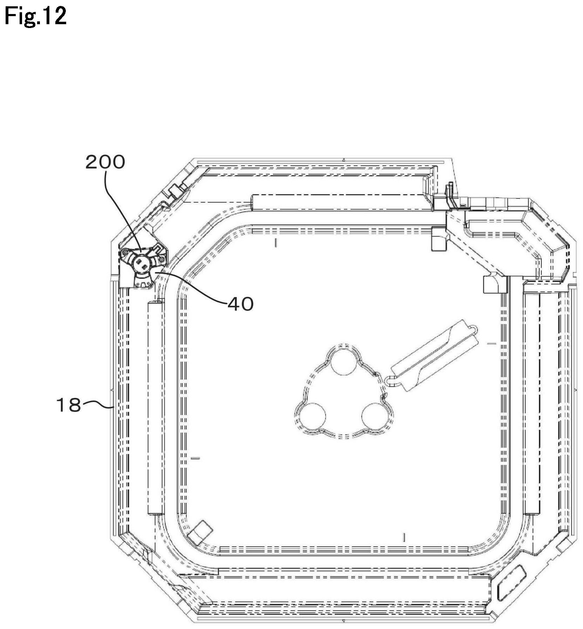

As shown in FIG. 12, a fixing part 40 where the drain pump 19 is to be fixed is provided at a corner inside the heat insulating member 18. Moreover, the fixing part 40 is formed as a step or a ledge at the corner inside the heat insulating member 18. A drain pump fixing member 200 for fixing the drain pump 19 is attached to the fixing part 40.

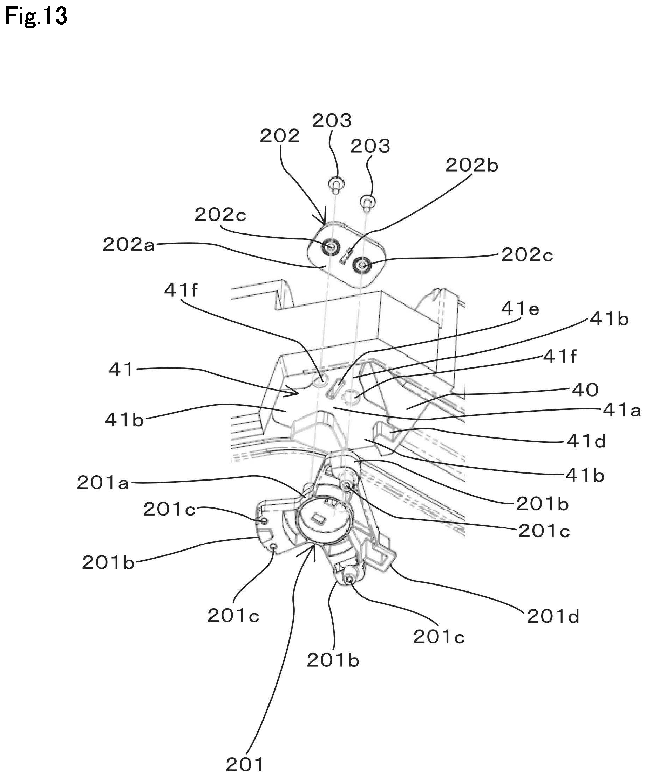

As shown in FIG. 13, the drain pump fixing member 200 is a structure combining an inner member 201 and an outer member 202. The inner member 201 includes a circular inner member main body 201a. Furthermore, the inner member 201 includes a plurality, in this case, three, of extending portions 201b that extend radially in a radial direction from the inner member main body 201a. A screw hole 201c is formed in a distal end of each extending portion 201b.

One screw hole 201c is formed in each of two extending portions 201b among the plurality of extending portions 201b. A plurality, in this case, two, of screw holes 201c are formed in one extending portion 201b among the plurality of extending portions 201b. Furthermore, the inner member 201 includes a positioning portion 201d that extends from the inner member main body 201a. The positioning portion 201d is rectangular.

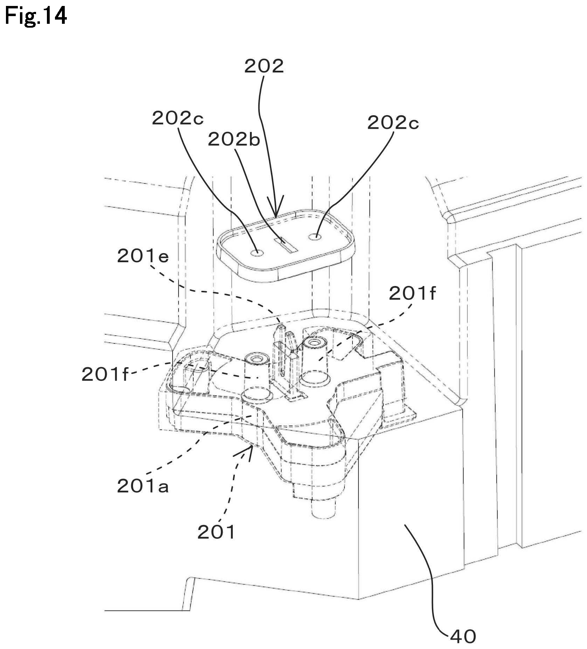

Furthermore, as shown in FIG. 14, an engaging claw 201e is formed at a center of the inner member main body 201a. The engaging claw 201e extends toward the outer member 202 side. A distal end portion of the engaging claw 201e is divided into two, and is elastically deformable in a radial direction of the inner member 201. The inner member 201 also includes a plurality, in this case, two, of screw receiving portions 201f that are disposed to sandwich the engaging claw 201e.

As shown in FIG. 13, a fitting groove 41 into which the inner member 201 is to be fitted is formed on the fixing part 40 on the heat insulating member 18 side. The fitting groove 41 includes a fitting groove main body 41a into which the inner member main body 201a of the inner member 201 is to be fitted, extending groove portions 41b into which the extending portions 201b of the inner member 201 are to be fitted, and a positioning groove portion 41d into which the positioning portion 201d of the inner member 201 is to be fitted.

Furthermore, an insertion hole 41e into which the engaging claw 201e of the inner member 201 is to be inserted is formed at a center of the fitting groove 41. Moreover, a plurality, in this case, two, of insertion holes 41f into which the screw receiving portions 201f of the inner member 201 are to be inserted are formed in the fitting groove 41.

The outer member 202 includes an engaging hole 202b at a center of an outer member main body 202a that has a rectangular plate shape. Furthermore, the outer member 202 includes a plurality, in this case, two, of screw holes 202c that sandwich the engaging hole 202b.

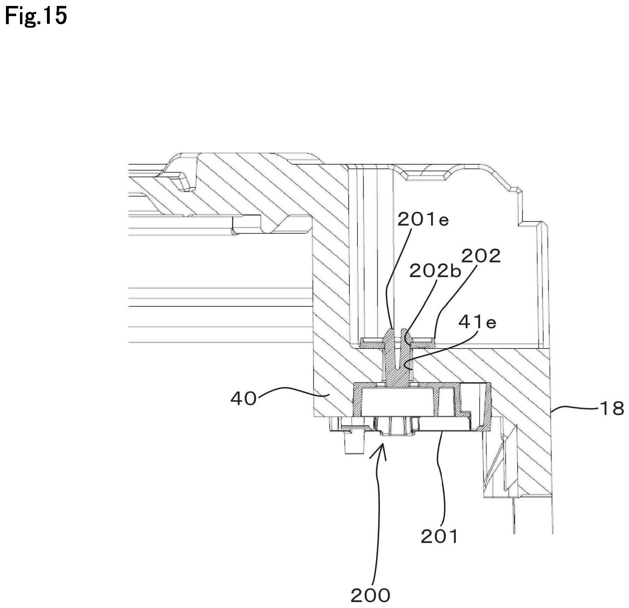

As shown in FIG. 15, the drain pump fixing member 200 is attached in a manner sandwiching the fixing part 40 between the inner member 201 and the outer member 202. In a state where the inner member 201 and the outer member 202 sandwich the fixing part 40, the engaging claw 201e of the inner member 201 passes through the insertion hole 41e and is engaged with the engaging hole 202b of the outer member 202. The inner member 201 and the outer member 202 are thus temporarily fixed while sandwiching the fixing part 40. The inner member 201 and the outer member 202 sandwiching the fixing part 40 are fixed due to screws 203 shown in FIG. 13 being screwed into the screw receiving portions 201f through the screw holes 202c. The inner member 201 and the outer member 202 are thus securely fixed while sandwiching the fixing part 40.

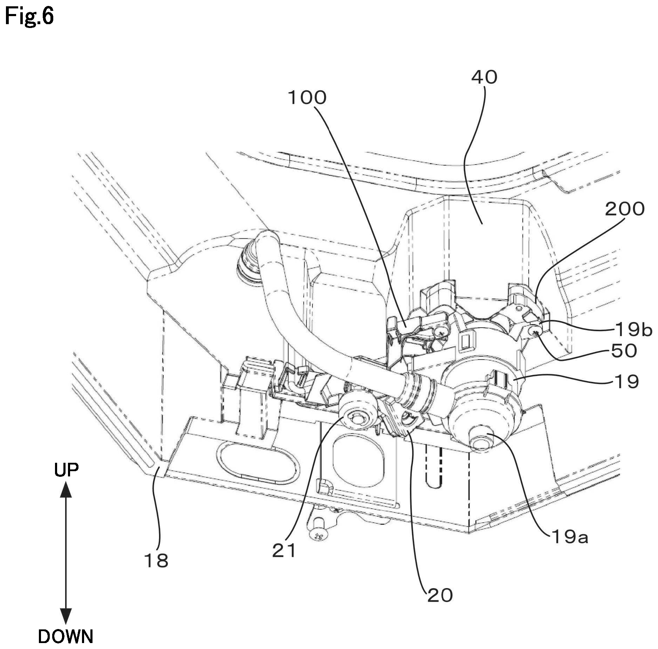

The drain pump 19 can be fixed to the drain pump fixing member 200 that is fixed to the fixing part 40 in the manner described above. That is, as shown in FIG. 6, a plurality of arm portions 19b of the drain pump 19 are each fixed in the screw hole 201c of the drain pump fixing member 200 by a screw 50. The drain pump 19 is thus tightly fixed to the fixing part 40.

Furthermore, the UV radiation unit fixing member 100 described above can also be fixed to the fixing part 40 together with the drain pump 19. That is, the joint part 101 of the UV radiation unit fixing member 100 is fixed to the screw holes 201c of the drain pump fixing member 200 by the screws 50, together with the arm portions 19b of the drain pump 19. The UV radiation unit fixing member 100 is thus fixed to the fixing part 40 together with the drain pump 19. That is, the UV radiation unit fixing member 100 can be "fastened together" with the drain pump 19 to the fixing part 40.

When a mucoid substance, such as a substance called drain slime, is generated in the water collected in the drain pan 17 due to reproduction of microorganisms such as bacteria, yeast and mold, the drain pump 19 possibly gets blocked by the substance. The recessed water reservoir 17a is provided at a part, of the drain pan 17, that is positioned below the drain pump 19 to allow smooth suction of water by the drain pump 19, and particularly during a summer season, water may permanently be present in the water reservoir 17a, and thus, the drain slime is easily generated, and the drain pump 19 is easily blocked. Accordingly, consideration is given to preventing generation of drain slime in the water reservoir 17a by radiating ultraviolet light on the water reservoir 17a and preventing reproduction of microorganisms. The present embodiment relates to the indoor unit 10, of an air conditioner, including the UV radiation device 20 for radiating ultraviolet light on the water reservoir 17a that is provided at a part, of the drain pan 17, that is positioned below the drain pump 19, and provides a technical solution by which the UV radiation device 20 can be compactly disposed together with the drain pump 19. With the indoor unit 10 of the air conditioner described above, the UV radiation unit fixing member 100 for fixing the UV radiation device 20 is fixed, together with the drain pump 19, to the fixing part 40 where the drain pump 19 is fixed. According to such an example structure, the UV radiation device 20 can be compactly disposed together with the drain pump 19.

The drain pump 19 to be mounted on this type of indoor unit 10 is designed to be able to be mounted on various models. That is, the drain pump 19 is designed to be commonly used by various models. Accordingly, the UV radiation unit fixing member 100 that is designed to allow fixation of the drain pump 19 can also be used by other models. Accordingly, the design of the UV radiation unit fixing member 100 does not have to be changed on a per-model basis.

Furthermore, with the indoor unit 10, the float switch 21 for detecting the water level inside the drain pan 17 can also be fixed to the UV radiation unit fixing member 100. According to such am example structure, a member for fixing the float switch 21 does not have to be provided separately from the UV radiation unit fixing member 100, and an increase in the number of components can be prevented.

Furthermore, with the indoor unit 10, the control device 30 is capable of performing control of switching the drain pump 19 between the operation state and the stopped state during radiation of ultraviolet light by the UV radiation device 20. According to the example control, ultraviolet light can be radiated while water in the water reservoir 17a of the drain pan 17 is being stirred, and reproduction of microorganisms can be effectively inhibited.

Moreover, with the indoor unit 10, the UV radiation device 20 is provided at a position higher than the upper limit of the detection range H of the float switch 21 and lower than the upper end 17b of the drain pan 17 by being fixed to the UV radiation unit fixing member 100. According to the example structure, the UV radiation device 20 can be prevented from being submerged in water in the drain pan 17, and also, water can be prevented from overflowing from the drain pan 17.

Moreover, the present embodiment relates to the indoor unit 10, of an air conditioner, including the drain pump 19 for discharging water collected in the drain pan 17, and provides a technical solution by which the drain pump 19 can be fixed by a low-cost structure. With the indoor unit 10, the drain pump fixing member 200 is attached in a manner sandwiching the fixing part 40 to which the drain pump 19 is fixed. According to the example structure, the drain pump 19 can be fixed without inserting sheet metal or the like with a screw hole inside the heat insulating member 18, and the drain pump 19 can be fixed by a low-cost structure.

Additionally, the present embodiment is not limited to the embodiment described above, and various changes, additions and the like can be made within the scope of the embodiment.

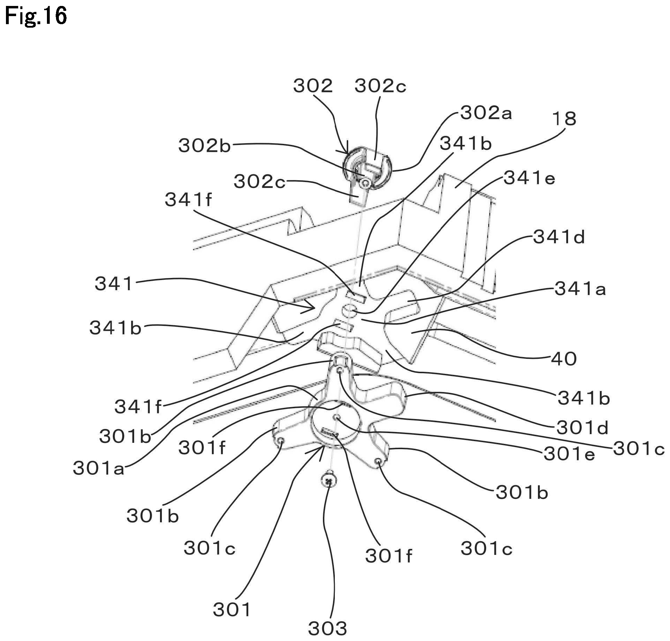

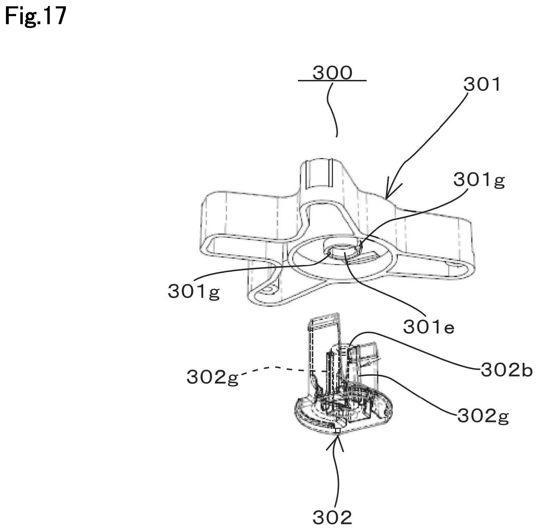

For example, FIGS. 16 and 17 show a modification of the drain pump fixing member. That is, a drain pump fixing member 300 is a structure combining an inner member 301 and an outer member 302. The inner member 301 includes a circular inner member main body 301a. Furthermore, the inner member 301 includes a plurality, in this case, three, of extending portions 301b that extend radially in a radial direction from the inner member main body 301a. A screw hole 301c is formed in a distal end of each extending portion 301b. Furthermore, the inner member 301 includes a positioning portion 301d that extends in the radial direction from the inner member main body 301a. The positioning portion 301d is rectangular.

Furthermore, a screw hole 301e that is a circular opening is formed at a center of the inner member main body 301a. A plurality, in this case, two, of engaging holes 301f are formed in the inner member main body 301a in a manner sandwiching the screw hole 301e. The engaging holes 301f are rectangular openings.

A fitting groove 341 into which the inner member 301 is to be fitted is formed on the fixing part 40 on the heat insulating member 18 side. The fitting groove 341 includes a fitting groove main body 341a into which the inner member main body 301a of the inner member 301 is to be fitted, extending groove portions 341b into which the extending portions 301b of the inner member 301 are to be fitted, and a positioning groove portion 341d into which the positioning portion 301d of the inner member 301 is to be fitted.

Furthermore, a screw hole 341e corresponding to the screw hole 301e of the inner member 301 is formed at a center of the fitting groove 341. Moreover, a plurality, in this case, two, of insertion holes 341f are formed in the fitting groove 341 in a manner sandwiching the screw hole 341e. The insertion holes 341f are openings having a rectangular shape that correspond to the engaging hole 301f of the inner member 301.

The outer member 302 includes a screw receiving portion 302b at a center of a circular outer member main body 302a. Furthermore, the outer member 302 includes a plurality, in this case, two, of engaging claws 302c. The engaging claws 302c extend from an outer peripheral portion of the outer member main body 302a toward the inner member 301. The engaging claws 302c are provided at positions facing each other across the screw receiving portion 302b. Furthermore, the engaging claws 302c are elastically deformable in a radial direction of the outer member 302.

The drain pump fixing member 300 is attached in a manner sandwiching the fixing part 40 between the inner member 301 and the outer member 302. In a state where the inner member 301 and the outer member 302 sandwich the fixing part 40, the engaging claws 302c of the outer member 302 pass through the insertion holes 341f and are engaged with the engaging holes 301f of the inner member 301. The inner member 301 and the outer member 302 are thus temporarily fixed while sandwiching the fixing part 40. The inner member 301 and the outer member 302 sandwiching the fixing part 40 are fixed due to a screw 303 being screwed into the screw receiving portion 302b through the screw hole 301e and the screw hole 341e. The inner member 301 and the outer member 302 are thus securely fixed while sandwiching the fixing part 40.

Furthermore, as shown in FIG. 17, the inner member 301 includes a rotation suppression groove 301g at a part of the screw hole 301e. The outer member 302 includes a rotation suppression rib 302g at a part of the screw receiving portion 302b. The rotation suppression groove 301g and the rotation suppression rib 302g both extend in an extension direction of the screw receiving portion 302b, or in other words, in an axial direction of the drain pump fixing member 300.

In a state where the inner member 301 and the outer member 302 are combined while sandwiching the fixing part 40, the rotation suppression rib 302g of the outer member 302 fits in the rotation suppression groove 301g of the inner member 301. Accordingly, rotation of the inner member 301 relative to the outer member 302, or rotation of the outer member 302 relative to the inner member 301 can be suppressed at the time of the screw 303 being screwed into the screw receiving portion 302b. The rotation suppression groove 301g and the rotation suppression rib 302g function as an example of a rotation suppression part that suppresses rotation of the drain pump fixing member 300 at the fixing part 40 where the drain pump 19 is fixed, or rotation of the inner member 301 or the outer member 302 forming the drain pump fixing member 300.

The drain pump 19 can be fixed also to the drain pump fixing member 300 that is fixed to the fixing part 40 in the manner described above. That is, the arm portions 19b of the drain pump 19 are each fixed to the screw hole 301c of the drain pump fixing member 300 by the screw 50. The drain pump 19 is thus tightly fixed to the fixing part 40.

Furthermore, the UV radiation unit fixing member 100 described above can also be fixed to the fixing part 40 together with the drain pump 19. That is, the joint part 101 of the UV radiation unit fixing member 100 is fixed to the screw holes 301c of the drain pump fixing member 300 by the screws 50, together with the arm portions 19b of the drain pump 19. The UV radiation unit fixing member 100 is thus fixed to the fixing part 40 together with the drain pump 19. That is, the UV radiation unit fixing member 100 is "fastened together" with the drain pump 19 to the fixing part 40.

Moreover, the drain pump fixing member 300 includes the rotation suppression groove 301g and the rotation suppression rib 302g for suppressing rotation of the drain pump fixing member 300 at the fixing part 40 where the drain pump 19 is fixed. According to the example structure, rotation of the inner member 301 or the outer member 302 at the time of fixing the inner member 301 and the outer member 302 forming the drain pump fixing member 300 by the screw 303 can be suppressed. Accordingly, attachment of the inner member 301 and the outer member 302, or in other words, attachment of the drain pump fixing member 300, can be easily performed.

As described above, structure, shape and the like of each part of the drain pump fixing member can be changed as appropriate. Furthermore, although specific description of a modification is omitted, structure, shape and the like of each part of the UV radiation unit fixing member 100 can also be changed as appropriate.

Heretofore, an embodiment of the present invention has been described, but the embodiment has been presented by way of example only, and is not intended to limit the scope of the invention. The novel embodiment described herein may be embodied in a variety of other forms, and various omissions, substitutions and changes may be made without departing from the spirit of the invention. The present embodiment and modification fall within the scope and spirit of the invention, and fall within the claimed inventions and their equivalents.

## Claims

1. An indoor unit (10) of an air conditioner, the indoor unit comprising:
an air inlet port (13) for suctioning air inside a room;
a heat exchanger (16) for exchanging heat with the air suctioned from the air inlet port (13);
an air outlet port (14) for blowing the air after heat exchange by the heat exchanger (16) out to the room;
a drain pan (17) provided below the heat exchanger (17), the drain pan (17) being for receiving water generated at the heat exchanger (16);
a drain pump (19) for discharging water collected in the drain pan (17);
a UV radiation unit (20) configured to radiate ultraviolet light to a water reservoir (17a) provided at a part, of the drain pan (17), positioned below the drain pump (19); and
a UV radiation unit fixing member (100) for fixing the UV radiation unit (20), wherein
the UV radiation unit fixing member (100) is fixed to a fixing part (40) where the drain pump (19) is fixed, together with the drain pump (19).

2. The indoor unit (10) of an air conditioner according to claim 1, the indoor unit further comprising a water level detection unit (21) for detecting a water level inside the drain pan, wherein
the UV radiation unit fixing member (100) is further capable of fixing the water level detection unit (21).

3. The indoor unit (10) of an air conditioner according to claim 1 or 2, wherein the drain pump (19) is switched between an operation state and a stopped state during radiation of ultraviolet light by the UV radiation unit (21).

4. The indoor unit of an air conditioner (10) according to any one of claim 1 to 3, the indoor unit (10) further comprising a water level detection unit (21) for detecting a water level inside the drain pan (17), wherein
the UV radiation unit (20) is provided at a position higher than an upper limit of a detection range of the water level detection unit (21) and lower than an upper end of the drain pan (17).
